# EUROPÄISCHE PATENTSCHRIFT

(11) **EP 1 186 222 B1**
(45) Veröffentlichungstag und Bekanntmachung des Hinweises auf die Patenterteilung: **19.01.2005**
(21) Anmeldenummer: 01120548.1
(22) Anmeldetag: 29.08.2001
(51) Int. Cl.: A01D 41/12

(54) **Schwenkmechanismus eines Entladerohrs**
Swivel mechanism for a discharge pipe
Mécanisme de pivotement pour tube de vidange

(30) Priorität: 12.09.2000 US 660171
(43) Veröffentlichungstag der Anmeldung: 13.03.2002
(73) Patentinhaber: DEERE & COMPANY, Moline, Illinois 61265-8098 (US)
(72) Erfinder: Signer, Todd Neil, East Moline, IL 61244 (US); DePoorter, Mark Charles, East Moline, IL 61244 (US); Gerber, Edwin Milton, Hooppole, IL 61258 (US)
(74) Vertreter: Holst, Sönke, Dr.

(56) Entgegenhaltungen:
- EP-A- 0 478 847
- DE-A- 1 407 742
- FR-A- 2 013 026
- FR-A- 2 203 765
- FR-A- 2 241 231
- US-A- 3 872 982

## Beschreibung

Die Erfindung betrifft einen Schwenkmechanismus eines Entladerohrs, das einen oberen Abschnitt und einen unteren Abschnitt umfasst, die einander benachbart angeordnet und zum Verschwenken des Entladerohrs relativ zueinander verschenkbar sind. Ein derartiger mechanismns ist z.B. aus DE-A-1 407 742 bekannt.

Es ist bekannt, landwirtschaftliche Fahrzeuge, wie Mähdrescher, mit einem Behälter versehen, um Korn, das der Mähdrescher geerntet und gedroschen hat, zeitweise zu speichern. Mit diesen Behältern stehen Entladerohre in Betriebsverbindung, durch die das Korn aus dem Behälter während der Kornentladevorgänge fließt. Im Allgemeinen ist ein Schneckenförderer im Entladerohr angeordnet, um Korn aus dem Behälter in das Entladerohr hinein und durch das Entladerohr hindurch zu fördern. Wenn auf diese Art und Weise Korn aus dem Kornbehälter des Mähdreschers durch das Entladerohr entladen wird, wird das Korn auf einen neben dem Mähdrescher herfahrenden Lastwagen oder Anhänger ausgestoßen.

Viele konventionelle Entladerohre umfassen einen im Wesentlichen vertikalen unteren Abschnitt, der mit einem unteren Abschnitt des Kornbehälters des Mähdreschers in Wirkverbindung steht und sich von ihm nach oben erstreckt. Ein oberer Abschnitt des Entladerohrs erstreckt sich im Wesentlichen horizontal und steht mit dem oberen Endabschnitt des vertikalen Abschnitts in Wirkverbindung. Im Allgemeinen sind Schneckenförderer innerhalb des unteren und oberen Abschnitts des Entladerohrs angeordnet. Oft ist ein Getriebe an der Verbindungsstelle des unteren und oberen Abschnitts des Entladerohrs bereitgestellt, um die Abschnitte des Schneckenförderers in den beiden Abschnitten des Entladerohrs betriebsmäßig zu verbinden.

Konventionelle Entladerohre sind zum Verschwenken um die Mittelachse des unteren Abschnitts des Entladerohrs zwischen zwei Positionen eingerichtet. In einer ersten Position ist der obere Abschnitt des Entladerohrs im Wesentlichen längs zur Fahrtrichtung des Fahrzeugs orientiert und in geringem Abstand entlang der Seite des Fahrzeugs angeordnet. Das Entladerohr kann um die Mittelachse des unteren Abschnitts von dieser Position nach außen in eine Position geschwenkt werden, in der sich der obere Abschnitt des Entladerohrs von der Seite des Mähdreschers in Wesentlichen seitlich nach außen erstreckt. Das äußere Ende des Entladerohrs ist relativ hoch in der Luft angeordnet, so dass ein Anhänger oder Lastwagen unter dem Ende des Entladerohrs positioniert werden kann, um das vom Entladerohr ausgestoßene Korn aufzunehmen.

Die Entladerohre sind häufig relativ schwer aufgebaut, da sie die Schneckenförderer beinhalten und ein großes Gewicht tragen, wenn sie während des Entladebetriebs große Getreidemengen aufnehmen. Die Entladerohre müssen daher abgestützt werden, um diesen Kräften während des Betriebs standhalten zu können. Konventionelle Mähdrescher weisen in der Regel eine obere Trägerstruktur oberhalb des vertikalen Abschnitts des Entladerohrs auf. Die obere Trägerstruktur hilft dabei, den vertikalen Abschnitt des Entladerohrs sicher an Ort und Stelle zu halten, wenn er schwenkt und hilft zu verhindern, dass der vertikale Abschnitt wegen des Gewichts des Rohrs, der Schnecken und des Korns im Entladerohr umkippt. Der vertikale Abschnitt des Entladerohrs wird durch eine kräftige Tragringstruktur fest in seiner Position gehalten, welche den unteren Abschnitt des Entladerohrs abstützt und dem Entladerohr das Drehen ermöglicht.

Konventionelle Tragringstrukturen umfassen typischerweise männliche und weibliche Gussringelemente, die einen Teil des Entladerohrs bilden. Der männliche Gussring ist unterhalb des weiblichen Gussrings angeordnet und darin aufgenommen. Der männliche und der weibliche Gussring stützen sich aneinander ab und schwenken im gegenseitigen Kontakt, wenn das Entladerohr in seine verschiedenen Positionen verschwenkt wird. Der weibliche Gussring umfasst in der Regel eine Einrichtung zum Schmieren der sich aneinander abstützenden Oberflächen des männlichen und weiblichen Gussrings. Konventionelle Schmiernippel und Schmiermittelkanäle sind bereitgestellt, um es zu ermöglichen, die abstützenden Oberflächen mit Schmiermittel zu beaufschlagen.

Korn, Staub und andere kleine Teilchen, die sich im Entladerohr nach oben bewegen, lagern sich häufig in den Schmiermittelkanälen und zwischen den abstützenden Oberflächen ab. Derartige Verunreinigungen können zur Abnutzung des männlichen und des weiblichen Gussrings führen, wenn die zwei Teile relativ zueinander verschwenken. Die Verunreinigungen können auch das Schmiersystem verstopfen, so dass die abstützenden Oberflächen wegen fehlender Schmierung trocken werden und abnutzen. Daher müssen Bediener derartiger Systeme das Schmiersystem häufig prüfen und warten, um übermäßigen Verschleiß zu vermeiden.

Die der Erfindung zugrunde liegende Aufgabe wird darin gesehen, einen Mechanismus bereitzustellen, der es ermöglicht, ein Entladerohr in seine unterschiedlichen Positionen zu verschenken, und der gegenüber durch Verunreinigungen bedingte Abnutzung unempfindlich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung stellt einen Schwenkmechanismus für das Entladerohr eines Mähdreschers bereit, das obere und untere Abschnitte aufweist, die einander nahe benachbart sind und relativ zueinander verschwenkbar sind, um ein Verschwenken des Entladerohrs zu ermöglichen. Obere und untere, in der Regel ringförmige Lagerungen sind am oberen bzw. unteren Abschnitt befestigt und bewegen sich beim Verschwenken mit ihnen. Die obere und die untere Lagerung stellen tragende Oberflächen bereit, durch die Gewichtskräfte vom oberen Abschnitt des Entladerohrs auf den unteren Abschnitt des Entladerohrs übertragen werden. Die obere und untere Lagerung können im Kontakt miteinander gleiten, wenn das Entladerohr in seine verschiedenen Positionen schwenkt. Die obere und die untere Lagerung sind aus Material mit ultrahohem Molekulargewicht hergestellt. In der Regel ist der untere Abschnitt und die untere Lagerung fest mit dem Fahrzeug verbunden und der obere Abschnitt und die obere Lagerung drehen sich beim Verschwenken des Entladerohrs gemeinsam relativ zum Fahrzeug, wobei die obere Lagerung auf der unteren Lagerung gleitet.

Auf diese Weise erhält man bei geeigneter Wahl des Materials der Lagerungen einen Schwenkmechanismus, der gegenüber Abnutzungserscheinungen, wie sie durch eindringende Fremdpartikel bedingt sein können, resistent ist. Ein Schmiersystem und der damit verbundene Wartungsaufwand erübrigen sich in der Regel.

Vorzugsweise sind in der oberen und der unteren Lagerung sowie im oberen und im unteren Abschnitt zusammenpassende Formen vorgesehen. Diese zusammenpassenden Formen verhindern, dass sich die obere Lagerung relativ zum oberen Abschnitt dreht, und dass sich die untere Lagerung relativ zum unteren Abschnitt dreht. In einer bevorzugten Ausführungsform umfassen die zusammenpassenden Formen an die Lagerungen angeformte Zapfenelemente und Öffnungen im oberen und unteren Abschnitt zur Aufnahme der Zapfenelemente.

In den Zeichnungen ist ein nachfolgend näher beschriebenes Ausführungsbeispiel der Erfindung dargestellt. Es zeigt:
- Fig. 1: eine schematische Seitenansicht eines Mähdreschers mit einem erfindungsgemäßen Schwenkmechanismus des Entladerohrs,

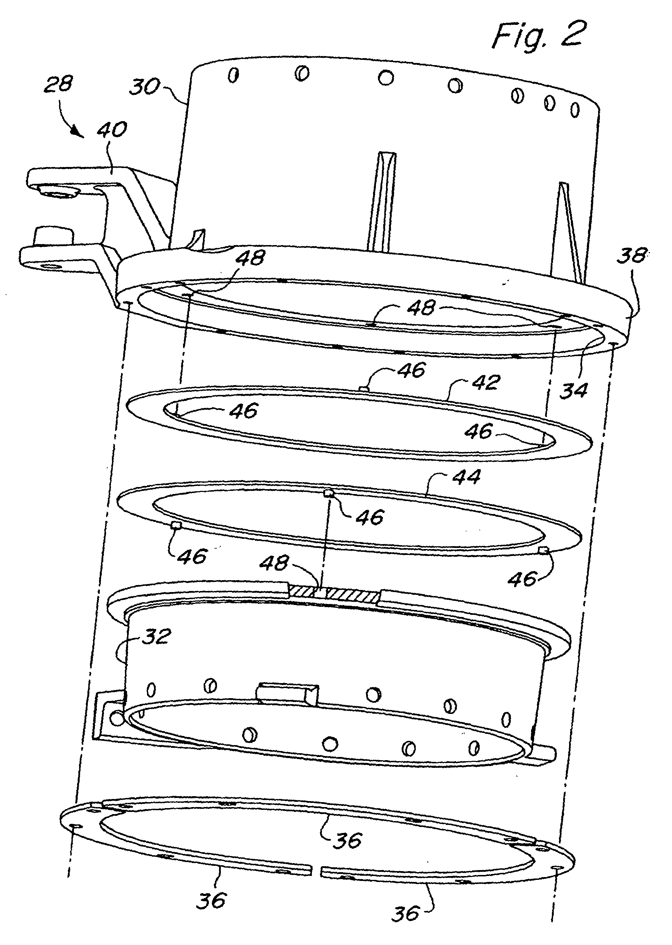

- Fig. 2: eine Explosionsansicht eines erfindungsgemäßen Schwenkmechanismus des Entladerohrs, und

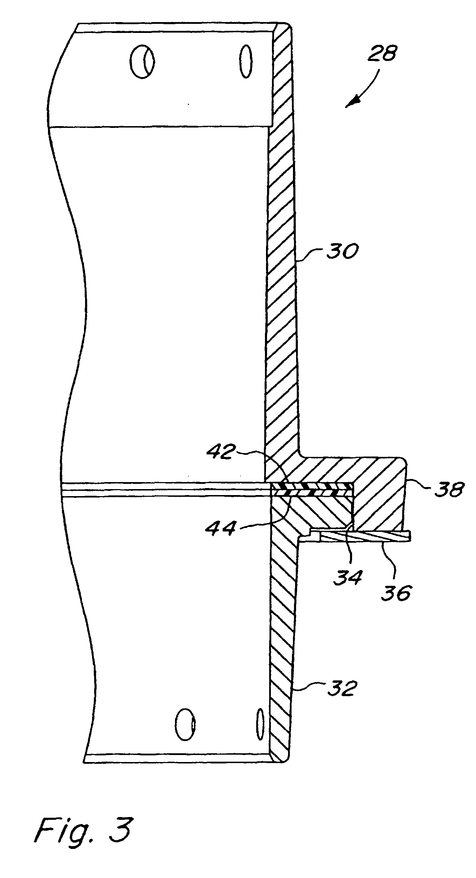

- Fig. 3: einen Querschnitt eines Abschnitts des in Figur 2 gezeigten erfindungsgemäßen Schwenkmechanismus.

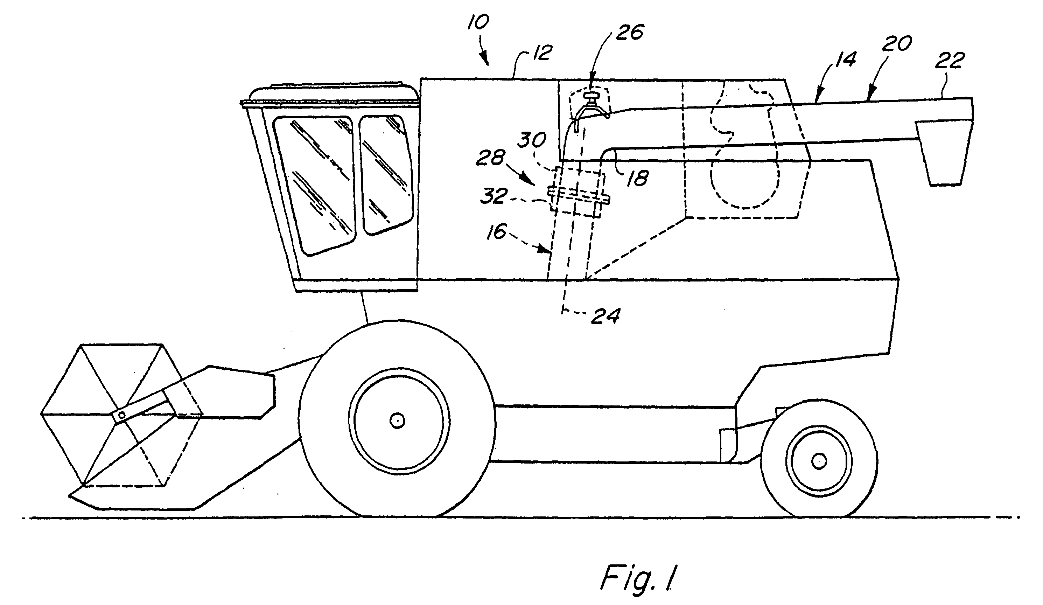

In Figur 1 ist eine Seitenansicht eines Mähdreschers 10 gezeigt, der zum Ernten und Dreschen von Erntegut, das Korn enthält, eingerichtet ist. Der Mähdrescher 10 umfasst einen Kornbehälter 12, dem gedroschenes Korn zugeführt wird. Ein Entladerohr 14 ist bereitgestellt, durch das Korn aus dem Kornbehälter 12 gefördert wird, um den Inhalt des Kornbehälters 12 auf einen Anhänger oder Lastwagen zu entleeren, der sich neben dem Mähdrescher 10 befindet. Das Entladerohr 14 umfasst einen im Wesentlichen vertikalen unteren Abschnitt 16, der mit einem Bodenabschnitt des Kornbehälters 12 des Mähdreschers 10 in Wirkverbindung steht. Korn aus dem Inneren des Kornbehälters 12 wird in den unteren Abschnitt 16 des Entladerohrs 14 gefördert und durch einen im unteren Abschnitt 16 des Entladerohrs 14 angeordneten Schneckenförderer darin nach oben gefördert. Das Entladerohr 14 hat am oberen Ende des unteren Abschnitts 16 einen abgewinkelten Abschnitt 18. Ein oberer, im Wesentlichen horizontaler Abschnitt 20 des Entladerohrs 14 ist mit dem abgewinkelten Abschnitt 18 verbunden und erstreckt sich im Wesentlichen horizontal, wenn er nahe an der Seite des Mähdreschers 10 angeordnet ist. Ein Getriebe innerhalb des abgewinkelten Abschnitts 18 überträgt Rotationsenergie vom Schneckenförderer im unteren Abschnitt 14 auf einen Schneckenförderer im oberen Abschnitt 20 des Entladerohrs 14.

Das Entladerohr 14 ist aus der in Figur 1 gezeigten Position, in der der obere Abschnitt 20 nahe der Seite des Mähdreschers 10 angeordnet ist, in eine Position schwenkbar, in der sich der obere Abschnitt 20 vom Mähdrescher 10 seitlich nach außen erstreckt. Wenn das Entladerohr 14 nach außen verschenkt wird, schwingt das äußere Ende 22 des Entladerohrs 14 geringfügig nach oben, da die Achse 24 des unteren Abschnitts 16, um die das Entladerohr 14 verschwenkt, einen kleinen Winkel mit der wirklichen Vertikalen einschließt. Dadurch wird es möglich, das Ende 22 des Entladerohrs 14 während des Entladevorgangs oberhalb großen Anhängern oder Lastwagen zu positionieren.

Wegen des Gewichts des Rohrs, der Schneckenförderer und des im Entladerohr 14 enthaltenen Korns ist das Entladerohr 14 relativ schwer. Um den aus diesem hohen Gewichtsbetrag entstehenden Kräften und Drehmomenten widerstehen zu können, ist das Entladerohr 14 mit oberen und unteren Stützmechanismen ausgestattet. Eine obere Abstützeinrichtung 26 ist etwa direkt oberhalb des unteren Abschnitts 16 des Entladerohrs 14 bereitgestellt. Die obere Abstützeinrichtung 26 hilft dabei, den unteren Abschnitt 16 des Entladerohrs 14 in seiner Position zu halten, wenn das Entladerohr 14 verschwenkt wird, und verhindert, dass das Gewicht des Entladerohrs 14 letzteres umkippt. Am unteren Ende des unteren Abschnitts 16 des Entladerohrs 14 ist ein unterer Ringstützmechanismus oder Schwenkmechanismus 28 angeordnet, der während des Betriebs einen großen Anteil des Gewichts des Entladerohrs 14 trägt und dem unteren Abschnitt 16 des Entladerohrs 14 ermöglicht, um seine Achse zu schwenken.

Der untere Schwenkmechanismus 28 umfasst einen oberen weiblichen Abschnitt 30 und einen unteren männlichen Abschnitt 32, die einen Teil des Entladerohrs 14 bilden. Der untere Abschnitt 32 passt in einen inneren Durchmesser 34 des oberen weiblichen Abschnitts 30 und ist darin aufgenommen. Sektorförmige Platten 36 sind an der Unterseite eines Flansches 38 des oberen Abschnitts festgeschraubt oder auf andere Art daran befestigt und dienen dazu, den unteren Abschnitt 32 an der richtigen Stelle in der Nähe des oberen Abschnitts 30 einzusperren. Der obere Abschnitt 30 umfasst einen Arm 40, an dem ein Ende eines Hydraulikzylinders oder eines anderen geeigneten Mechanismus angekoppelt werden kann. Das andere Ende des Hydraulikzylinders steht mit dem Mähdrescher 10 in Wirkverbindung. Ein Bediener des Mähdreschers 10 kann den Hydraulikzylinder betätigen, der dazu dient, den Arm 40 um die durch den oberen Abschnitt 30 definierte Achse 24 zu verschieben, wodurch der obere Abschnitt 30 und der horizontale Abschnitt 20 des Entladerohrs 14 zwischen ihren verschiedenen Positionen verschenkt werden. Der untere Abschnitt 32 und der obere Abschnitt 30 verschwenken daher relativ zueinander, wenn der Hydraulikzylinder betätigt wird, um dadurch dem Entladerohr 14 zu ermöglichen, in seine verschiedenen Positionen zu schwingen.

Der erfindungsgemäße untere Schwenkmechanismus 28 umfasst obere und untere schwenkbare ringförmige Lagerungen 42 und 44, die Lageroberflächen bereitstellen, welche aneinander reiben, wenn der obere und untere Abschnitt 30 und 32 relativ zueinander verschwenken. Die obere ringförmige Lagerung 42 ist am oberen Abschnitt 30 befestigt und mit ihm drehbar und die untere ringförmige Lagerung 44 ist am unteren Abschnitt 32 befestigt und dreht sich mit ihm. Die ringförmigen Lagerungen 42 und 44 umfassen Zapfenelemente oder Vorsprünge 46, die in Öffnungen 48 aufgenommen sind, welche in den jeweiligen oberen und unteren Abschnitten 30 und 32 vorgesehen sind. Die Zapfenelemente 46 der oberen Lagerung 42 und die Öffnungen 48 im oberen Abschnitt 30 definieren zusammenpassende Formen, die verhindern, dass sich die obere ringförmige Lagerung 42 gegenüber dem oberen Abschnitt 30 verschiebt. Die Zapfenelemente 46 der unteren Lagerung 44 und die Öffnungen 48 im unteren Abschnitt 32 definieren zusammenpassende Formen, die verhindern, dass sich die untere Lagerung 44 gegenüber dem unteren Abschnitt 32 verschiebt.

Die Lagerungen 42 und 44 sind aus Polyethylenmaterial mit ultrahohem Molekulargewicht hergestellt. Polyethylenmaterial mit ultrahohem Molekulargewicht ist ein zusammengesetztes oder Kunststoff-Material mit niedrigem Reibungskoeffizienten; es könnten jedoch auch andere Materialien mit niedriger Reibung verwendet werden, wie Nylon oder Urethan. Wenn die aus Material mit ultrahohem Molekulargewicht hergestellten Lagerungen 42 und 44 im Kontakt untereinander reiben, tendieren sie nicht dahin, übermäßige Abnutzung zu erfahren, sogar ohne Schmierung. Daher erübrigt es sich durch den erfindungsgemäßen Schwenkmechanismus 28, ein Schmiersystem bereitzustellen. Die Kosten und die Komplexität des Schwenkmechanismus 28 sind dadurch wesentlich vermindert. Außerdem erübrigt sich durch die Erfindung im Allgemeinen die Aufgabe des Bedieners, ein Schmiersystem zu prüfen und zu bedienen.

Wenn verunreinigende Materialien, wie Feststoffpartikel, Korn und Staub in Kontakt mit den Lagerungen 42 und 44 kommen, neigen derartige Verschmutzungen nicht dazu, die Lagerungen 42 und 44 abzunutzen. Es wurde herausgefunden, dass Verunreinigungen im Allgemeinen aus dem Zwischenraum zwischen den Lagerungen 42 und 44 ausgestoßen werden, ohne eine übermäßige Abnutzung der Lagerungen 42 und 44 herbeizuführen. Die Lagerungen 42 und 44 sind im Wesentlichen von eindringendem Fremdmaterial wie Erntegut oder Staub zwischen den abstützenden Oberflächen der Lagerungen 42 und 44 unbeeinflusst.

Die Lagerungen 42 und 44 sind in den Zeichnungen in kreisförmiger Form dargestellt; sie könnten jedoch auch in Form einer Vielzahl von sektorförmigen Elementen bereitgestellt sein, die im Wesentlichen eine Kreisform bilden, wenn sie zusammengesetzt sind.

## Patentansprüche

1. Schwenkmechanismus (28) eines Entladerohrs (14), das einen oberen Abschnitt (30) und einen unteren Abschnitt (32) umfasst, die einander benachbart angeordnet und zum Verschwenken des Entladerohrs (14) relativ zueinander verschenkbar sind, **gekennzeichnet durch** eine obere Lagerung (42) und eine untere Lagerung (44), die mit dem oberen Abschnitt (30) bzw. dem unteren Abschnitt (32) verbunden und gemeinsam mit ihnen verschwenkbar sind, wobei die obere und die untere Lagerung (42, 44) tragende Oberflächen haben, die im gleitenden Kontakt miteinander sind und **durch** die Gewicht von dem oberen Abschnitt (30) des Entladerohrs (14) auf den unteren Abschnitt (32) übertragen wird, und wobei die obere und untere Lagerung (42, 44) aus Material mit ultrahohem Molekulargewicht sind.

2. Schwenkmechanismus nach Anspruch 1, **dadurch gekennzeichnet, dass** in der oberen und der unteren Lagerung (42, 44) und im oberen und im unteren Abschnitt (30, 32) zusammenpassende Formen vorhanden sind, die verhindern, dass die obere und untere Lagerung (42, 44) gegenüber dem oberen bzw. unteren Abschnitt (30, 32) rotieren.

3. Schwenkmechanismus nach Anspruch 2, **dadurch gekennzeichnet, dass** die zusammenpassenden Formen an die Lagerungen (42, 44) angeformte Zapfenelemente (46) und Öffnungen (48) im oberen und unteren Abschnitt (30, 32) umfassen, in denen die Zapfenelemente (46) aufgenommen sind.

4. Schwenkmechanismus nach einem der Ansprüche 1 bis 3, **dadurch gekennzeichnet, dass** die Lagerungen (42, 44) ringförmig sind.

5. Schwenkmechanismus nach einem der Ansprüche 1 bis 4, **dadurch gekennzeichnet, dass** die Lagerungen (42, 44) aus Polyethylen und/oder Nylon und/oder Polyurethan sind.

6. Mähdrescher (10) mit einem Schwenkmechanismus (28) nach einem der vorhergehenden Ansprüche.

## Claims

1. A swivel mechanism (28) of a discharge pipe (14) which comprises an upper section (30) and a lower section (32) which are arranged next to one another and can turn relative to one another for swivelling the discharge pipe (14), **characterized by** an upper bearing (42) and a lower bearing (44) which are connected to the upper section (30) and the lower section (32) respectively and can turn in common with them, wherein the upper and the lower bearings (42, 44) have supporting surfaces which are in sliding contact with one another and through which the weight of the upper section (30) of the discharge pipe (14) is transferred to the lower section (32) and wherein the upper and lower bearings (42, 44) are of material with an ultra-high molecular weight.

2. A swivel mechanism according to claim 1, **characterized in that** matching forms are present in the upper and lower bearings (42, 44) and in the upper and lower sections (30, 32) and prevent the upper and lower bearings (42, 44) rotating relative to the upper and lower sections (30, 32) respectively.

3. A swivel mechanism according to claim 2, **characterized in that** the matching forms comprise peg elements (46) formed on the bearings (42, 44) and openings (48) in the upper and lower sections (30, 32) in which the peg elements (46) are received.

4. A swivel mechanism according to any of claims 1 to 3, **characterized in that** the bearings (42, 44) are annular.

5. A swivel mechanism according to any of claims 1 to 4, **characterized in that** the bearings (42, 44) are of polyethylene and/or nylon and/or polyurethane.

6. A combine harvester (10) with a swivel mechanism (28) according to any of the preceding claims.

## Revendications

1. Dispositif de pivotement (28) pour un tube de vidange (14), comportant une section supérieure (30) et d'une section inférieure (32), qui sont agencées au voisinage l'une de l'autre et qui peuvent pivoter l'une par rapport à l'autre en vue du pivotement du tube de vidange (14), **caractérisé par** un palier supérieur (42) et un palier inférieur (44), qui sont reliés respectivement à la section supérieure (30) et à la section inférieure (32), et qui peuvent pivoter ensemble avec elles, le palier supérieur et le palier inférieur (42, 44) présentant des surfaces portantes qui sont en contact à glissement l'une avec l'autre, et par lesquelles le poids de la section supérieure (30) du tube de vidange (14) est transféré à la section inférieure (32), les paliers supérieur et inférieur (42, 44) étant réalisés en un matériau à poids moléculaire ultra élevé.

2. Mécanisme de pivotement selon la revendication 1, **caractérisé en ce que** dans les paliers supérieur et inférieur (42, 44), et dans les sections supérieure et inférieure (30, 32) sont créées des formes s'adaptant les unes aux autres, qui empêchent que les paliers supérieur et inférieur (42, 44) ne pivotent par rapport aux sections supérieure et inférieure (30, 32), respectivement.

3. Mécanisme de pivotement selon la revendication 2, **caractérisé en ce que** les formes adaptables des paliers (42, 44) consistent en des éléments formant chevilles (46) et en renfoncements (48) pratiqués dans les sections supérieure et inférieure (30, 32), dans lesquels sont reçus les éléments formant chevilles (46).

4. Mécanisme de pivotement selon l'une quelconque des revendications 1 à 3, **caractérisé en ce que** les paliers (42, 44) sont de forme annulaire.

5. Mécanisme de pivotement selon l'une quelconque des revendications 1 à 4, **caractérisé en ce que** les paliers (42, 44) sont réalisés en polyéthylène et/ou en Nylon, et/ou en polyuréthane

6. Moissonneuse-batteuse (10), comportant un mécanisme de pivotement selon l'une quelconque des revendications précédentes.
